Europäisches Patentamt

European Patent Office

Office européen des brevets

(11) Publication number: **0 311 879**
**A1**

## (12) EUROPEAN PATENT APPLICATION

(21) Application number: 88116448.7

(22) Date of filing: 05.10.88

(51) Int. Cl.⁴: **A01K 61/00** , **A22C 25/04** , **B07B 13/07**

(30) Priority: **13.10.87 NO 874281**

(43) Date of publication of application:
**19.04.89 Bulletin 89/16**

(84) Designated Contracting States:
**AT BE CH DE FR GB IT LI NL SE**

(71) Applicant: **Espedalen, Kare**
**Grenseveien 9**
**N-3290 Stavern(NO)**

(72) Inventor: **Espedalen, Kare**
**Grenseveien 9**
**N-3290 Stavern(NO)**

(74) Representative: **Svanfeldt, Hans-Ake et al**
**DR. LUDWIG BRANN PATENTBYRA AB Box**
**1344 Drottninggatan 7**
**S-751 43 Uppsala(SE)**

(54) **A method and device for sizing live fish.**

(57) A method for sizing live fish, preferably farmed fish, comprises supplying a number of fish to a lead-in basin (1) which has so low a water level that the fish is only just able to swim. The fish is permitted to follow its natural urge to seek deeper water by having a number of deeper vessels (4,5,6,7) associated with lead-in basin (1), which vessels communicate with the lead-in basin and each other at their upper edges. The deeper vessels (4,5,6,7) have an intermediate bottom(9,9′,10,10′,11,11′) at the same or substantially the same level as bottom (8) in lead-in basin (1). In the intermediate bottoms slot-shaped openings (12,13,14) with increasing width from one tank to the next are provided. Water is continuously supplied to the deeper vessels (4,5,6,7), and the flow of water is guided up through the slot-shaped openings towards lead-in basin (1) which is provided with an outlet (3). The fish will, thus, swim fram lead-in basin (1) over intermediate bottom (9,9′) in the first deeper vessel (4), and the smallest fish will be able to pass down through slot-shaped openings (12,12′) in this vessel. Larger fish will swim on above intermediate bottom (10,10′) in the second vessel where the largest size fraction but one may seek down through the slot-shaped openings (13,13′), and so on.

*FIG.1*

## A METHOD AND A DEVICE FOR SIZING LIVE FISH

The present invention relates to a method and a device for sizing live fish, preferably farmed fish.

It is important that farmed fish can be sorted according to size frequently and in a gentle manner, especially during the early life of farmed fish. Even if fishes are hatched from the same spawn, various individuals will show different growth. Certain individuals grow much more rapidly than others, and it comes to cannibalism, the largest fishes eating the smaller ones. If no sizing is carried out losses due to such phenomena may have great economical consequences because a substantial percentage of the total quantity of fish is lost.

As regards fish for consumption it would also be of great importance to be able to sort live fish according to size in a simple and gentle manner. At certain times there will, thus be much demand for so called portion fish. By the aid of a simple method and gentle devices for sizing it would be possible to sort and take out fish of the size that is much in demand at the time.

Various methods and devices for sizing live fish have been proposed, but the previously known methods and devices proved to be too cumbersome and, thus, too expensive in use, or the handling involved was not gentle enough. It should be mentioned in this connection that fish of the salmon family will tolerate very little contact before it is harmed. In its early life very slight injuries may cause death of the individual.

It is, thus, an object of the present invention to propose a method and a device for sizing live fish, which method is simple and will cause minimum injuries of the fish, and which device is simple and inexpensive in production and is rather maintenance-free in use.

According to the invention this is achieved by a method for sizing live fish, preferably farmed fish, the characterizing features of which are that a number of fish is introduced into a lead-in basin with so low water that the fish can only just swim, that the fish is permitted to follow its natural urge to seek deeper water by having a number of deeper vessels associated with the lead-in basin, which vessels are in communication with the lead-in basin and each other at their upper edges, and have an intermediate bottom at the same level or substantially at the same level as the bottom of the lead-in basin, in which intermediate bottoms there are slot-shaped orifices showing increasing width from one vessel to the next. Water is preferably supplied to the deep vessels continuously, and the flow of water is directed towards the lead-in basin which is provided with an outlet.

The method according to the invention is as follows. A number of fish of the same order of zise, e.g. salmon fish at the stage after smoltification, is supplied to the lead-in basin. In said basin water is so low that the fish will only just be able to swim. Water flows from the deeper vessels towards the lead-in basin, and the fish will follow its natural urge to swim against the flow and will try to reach deeper water. When the fish gets in above the intermediate bottom with slot shaped orifices in the first vessel the fish will try to reach down to deeper water through the slots. This will be possible to the smallest fished, and the first fraction is, thus, separated. The remaining fish will swim on to the next vessel with slightly wider slots. Here, the next fraction of fish will pass down through the slots. In this manner sizing is continued until the fish is sized into the desired number of fractions.

The device according to the invention is characterized by a lead-in basin or a lead-in trough with so low water that the fish in question is only just able to swim. Associated with the lead-in basin a number of tanks is provided with one tank being provided after the other and the tanks having greater depth than the lead-in basin. Each tank is provided with an inermediate bottom on the same or substantially the same level as the bottom in the lead-in basin, and in said intermediate bottoms there are provided slot-shaped openings with increasing width from one tank to the next. The tanks are supplied with water, and the lead-in basin is provided with an outlet for water and communicates with the adjacent tank via the intermediate bottom, and tanks communicate mutually via the portions above intermediate bottoms.

Further features and details of the device will appear from claims 4-7.

The invention is disclosed in more detail below with reference to the drawing which shows an embodiment of the device according to the invention.

Figure 1 shows a top plan view of the device,

Figure 2 is a section along line II-II in Figure 1, and

Figure 3 shows a detail of a trough-shaped intermediate bottom.

The device comprises a lead-in basin 1 with a leaping screen 2. In the embodiment the basin is substantially quadratic, but it may, obviously, have any desired shape, e.g. a trough-shape. In its free end the basin is provided with one or a plurality of outlets 3 whith a strainer (not shown). In a series after the lead-in basin 1 a number of tanks, in the shown embodiment four tanks 4,5, 6, and 7 is provided with much larger depth than lead-in basin 1. At the same level as bottom 8 of the lead-in basin intermediate bottoms are provided in the tanks, apart from the last tank 7. In the shown embodiment the intermediate bottoms are designed as troughs 9, 9'; 10, 10'; 11, 11' for tanks 4, 5, and 6, respectively. In each trough there is a slot-shaped opening 12,12'; 13,13'; 14,14'. The slot-shaped openings 12,12' in troughs 9 and 9' have a small width, so that only the smallest fish 15 will pass down through said troughs. Openings 13, 13' in tank 5 show slightly more width than the upstreams openings, so that next fraction of size 16 may pass through the openings, and slot openings 14, 14' in troughs 11, 11' of tank 6 are still wider and let fraction of size 17 pass. The biggest fish 18 will leave the trough and reach tank 7 which will, thus, receive the biggest fraction of sizes. Obviously, more tanks may be provided in a series so that the fish will be sized into a larger number of fractions.

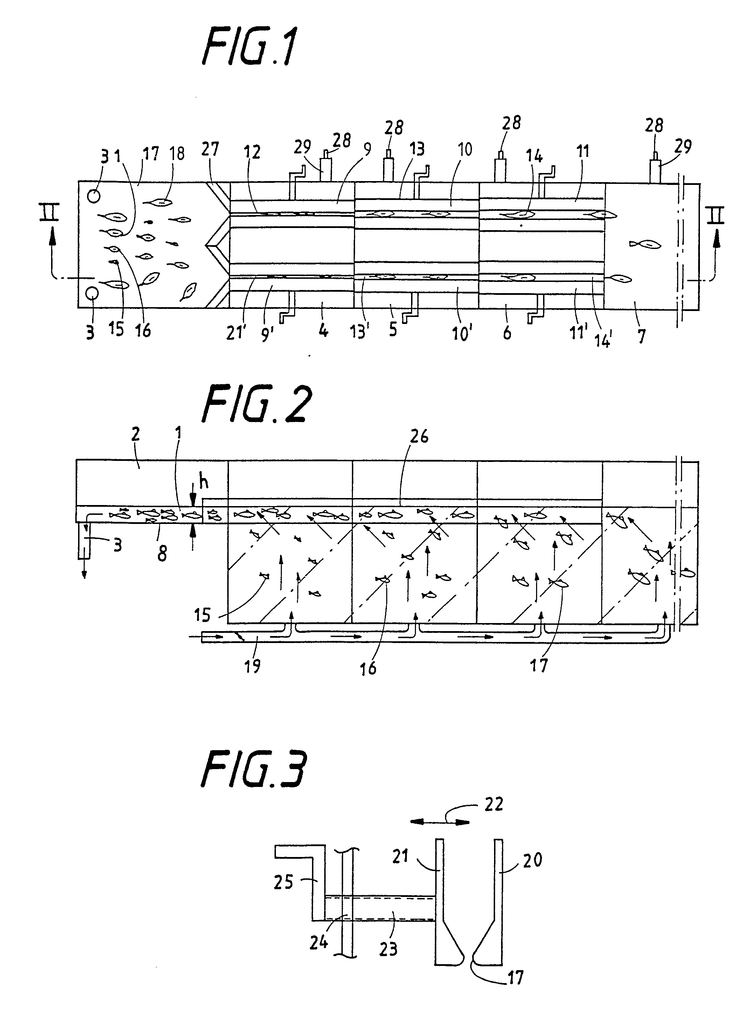

Water is supplied to each tank 4, 5, 6, and 7 from a water conduit 19 to provide a continuous water flow from all tanks upwards through the openings in troughs 9,9'; 10,10', and 11, 11' to lead-in basin 1 and out through outlet 3. As shown in Figure 3, the width of the slot-shaped openings may be adjusted, the troughs being divided into two halves 20,21. One half 20 is stationary, whereas the other half 21 may be adjusted in the direction of arrow 22 for adjustment of opening 12. Adjustment is achieved in a simple manner by the aid of a screw 23 which is secured to portion 21 and extends through a correspondingly threaded opening 24 in the wall of one of tanks 4, 5, or 6. At its outer end which projects through the wall screw 23 is provided with a crank handle 25.

When water is pumped into tanks 4, 5, 6, and 7 from pipeline 19 a flow will pass up through openings in troughs 9,9'; 10, 10'; 11,11', and from tank 7 towards lead-in basin 1. A water level 26 which is common to all vessels 4, 5, 6, and 7 and lead-in basin 1 will automatically be provided. Water is drained off through outlets 3 in basin 1. There will, thus, be a flow of water all the time from vessels 4, 5, 6, and 7 in troughs 9,9'; 10,10'; 11,11' to basin 1. The fish lead into basin 1 will swim towards the first vessel 4, both because the water level h i basin 1 is so low that the fish can only jsut swim, and because the fish tends to swim against the flow. The fish will, thus, make for the flowing water from troughs 9,9' above vessel 4. In order to lead the fish into said troughs their ends facing the basin 1 are provided with funnel-shaped lead-in screens 27. Basins 4-7 are provided with leaping screens in the same manner as basin 1.

The invention is not limited to the embodiment shown in the drawings and disclosed above. Basin 1 may, thus, have any shape, e.g. a trough shape associated with the troughs in the first vessel 4. Also, the intermediate bottom may cover the entire area above each vessel, and it may have more than two slots. Furthermore, a larger or smaller number of vessels may be associated with lead-in basin 1.

## Claims

1. A method for sizing live fish, preferably farmed fish, **characterized in** that a number of fish is introduced into a lead-in basin (1) having so low a water level (h) that the fish is only just able to swim, that the fish is permitted to follow its natural urge to seek deeper water by the fact that a number of deeper vessels are associated with lead-in basin (1) which vessels (4,5,6,7) communicate with the lead-in basin and with each other at their upper portion, and which vessels have an intermediate bottom at the same or substantially the same level as the bottom (8) of lead-in basin (1), in which intermediate bottoms (9,9'; 10,10'; 11,11') slot-shaped openings (12,12'; 13,13'; 14,14') with increasing width from one vessel to the next, are provided.

2. A method as defined in claim 1, **characterized in** that water is supplied to the deeper vessels (4,5,6,7) continuously, and that the water flow is guided up through the slot-shaped openings (12, 12';, 13, 13'; 14, 14') towards lead-in basin (1) where water flows out of an outlet (3).

3. A device for carrying out the method as defined in claims 1 and 2, for sizing live fish, especially farmed fish, **characterized in** a basin or a trough (1) having so low a water level that the fish in question are only just able to swim, that, associated with the lead-in vessel a series of tanks (4,5,6,7) with greater depth than the lead-in basin are provided, that each tank (4,5,6,7) is provided with an itnermediate bottom (9,9'; 10,10'; 11,11') at the same or substantially the same level as bottom (8) in lead-in basin (1), that in the intermediate bottoms slot-shaped openings (12,12'; 13,13'; 14,14') with increasing width from one tank to the next are provided, that tanks (4, 5,6,7) have a water supply and that lead-in basin (1) has an outlet (3) for water and communicates with adjacent tank (4) at the portion positioned above the intermediate bottom, and that tanks (4,5,6,7) communicate mutually at their portions positioned above the intermediate bottom.

4. A device as defined in claim 3, **characterized in** that constant water supply is provided to tanks (4,5,6,7), so that when the device is used there will be a constant flow of water from each tank (4,5,6,7), up through the slot-shaped openings, and on towards lead-in basin (1).

5. A device as defined in claim 3, **characterized in** that the width of the slot shaped openings is adjustable.

6. A device as defined in claim 3, **characterized in** that the intermediate bottom consists of one or a plurality of troughs (9,9'; 10, 10'; 11,11') in the bottom of which said slot-shaped opening (12,12'; 13,13'; 14,14') is provided, and that the troughs in the different tanks communicate with each other.

7. A device as defined in claim 3, **characterized in** that a further tank (7) is provided without any top portion after the last tank (6) with a top portion, and is intended for receiving the largest size fraction of fish.

8. A device as defined in one or several of the preceding claims 3-7, **characterized in** that the water supply is provided in the bottom of tanks (4,5,6,7).

9. A device as defined in one or several of the preceding claims 3-8, **characterized in** that an outlet (28) with a counter (29) for each outlet is provided in every tank.

# FIG.1

# FIG.2

# FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-C-205 329 (MESCHEDE) <br> * page 1, line 12 - page 2, line 34; figures 1-3 * | 1,3 | A01K61/00 <br> A22C25/04 <br> B07B13/07 |
| Y | GB-A-1 149 437 (DE GREEF) <br> * page 1, line 65 - page 1, line 75 * <br> * page 1, line 86 - page 2, line 13; figures 2, 3 * | 1,3 | |
| A | | 5 | |

TECHNICAL FIELDS SEARCHED (Int. Cl.4)

A01K
A22C
B07B

The present search report has been drawn up for all claims

| Place of search | Date of completion of the search | Examiner |
|---|---|---|
| THE HAGUE | 19 JANUARY 1989 | VILBIG K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)